# FASCICULE DE BREVET EUROPEEN

(11) **EP 2 342 065 B1**
(45) Date de publication et mention de la délivrance du brevet: **19.09.2012**
(21) Numéro de dépôt: 09783964.1
(22) Date de dépôt: 13.10.2009
(51) Int. Cl.: B29C 49/68, B29C 49/46, B29B 13/02

(54) **FOUR PERFECTIONNÉ POUR LE CONDITIONNEMENT THERMIQUE DE PRÉFORMES EN MATIÈRE THERMOPLASTIQUE**
VERBESSERTER OFEN FÜR DIE THERMISCHE KONDITIONIERUNG VON AUS EINEM THERMOPLASTISCHEN MATERIAL HERGESTELLTEN VORFORMLINGEN
IMPROVED OVEN FOR THE THERMAL CONDITIONING OF PREFORMS MADE OF A THERMOPLASTIC MATERIAL

(30) Priorité: 22.10.2008 FR 0857164
(43) Date de publication de la demande: 13.07.2011
(73) Titulaire: Sidel Participations, 76930 Octeville sur Mer (FR)
(72) Inventeur: QUETEL, François, F-76930 Octeville Sur Mer (FR); DEMARE, Jérôme, F-76930 Octeville Sur Mer (FR)
(74) Mandataire: Thibaudeau, David A. C. R.
(86) Numéro de dépôt international: PCT/EP2009/063308
(87) Numéro de publication internationale: WO 2010/046270

(56) Documents cités:
- EP-A- 0 593 033
- CA-A1- 1 010 212
- FR-A- 2 561 986
- FR-A- 2 766 121
- US-A- 5 714 109
- US-B1- 6 632 087

## Description

L'invention concerne un four pour le conditionnement thermique de préformes en matière thermoplastique.

L'invention concerne plus particulièrement un four pour le conditionnement thermique de préformes en matière thermoplastique, comportant au moins un circuit de refroidissement par circulation d'un flux d'air principal de refroidissement qui, d'amont en aval, traverse successivement à l'intérieur du four au moins :
- une zone d'admission de l'air de refroidissement, qui comporte au moins un conduit d'admission d'air à travers lequel ledit flux d'air de refroidissement est apte à s'écouler, depuis l'extérieur du four, vers l'intérieur du four,
- une zone de chauffage qui est alimentée en air par le conduit d'admission et qui comporte des moyens de chauffage des préformes, et
- une zone d'extraction d'air dans laquelle débouche au moins un conduit d'extraction d'air.

La fabrication de récipients, tels que des flacons, des bouteilles, etc. en matière thermoplastique, par exemple en PET (polyéthylène téréphtalate), est généralement réalisée à partir de préformes obtenues par injection.

De telles préformes sont préalablement conditionnées thermiquement dans un four afin de permettre leur transformation, notamment par une opération de soufflage, ou d'étirage-soufflage, en un récipient à corps creux.

Les préformes ont généralement une forme d'éprouvette comportant principalement un corps, plus ou moins long, et un col qui a déjà sa forme définitive. En effet, le col de la préforme forme le goulot du récipient et comporte par exemple un filetage destiné à recevoir un bouchon à vis.

Avant de réaliser l'opération de soufflage, il est nécessaire de chauffer le corps des préformes à une température supérieure à leur température de transition vitreuse, sans toutefois dégrader ou « brûler » la surface extérieure, ou peau, du corps des préformes.

A cet effet, on connaît un type de four de chauffage pour le conditionnement thermique de préformes, tel que celui décrit dans le document EP-A1-1.699.613, qui comporte un circuit de refroidissement pourvu de moyens de ventilation adaptés pour obtenir un refroidissement par circulation d'un flux d'air.

Le circuit de refroidissement d'un tel four comporte principalement une première zone, pour l'admission d'air de refroidissement, une deuxième zone intermédiaire, pour le chauffage équipée des moyens de chauffage des préformes, par exemple des lampes à rayonnement infrarouge (IR), et une troisième zone, pour l'extraction de l'air après son réchauffage lors du passage dans la deuxième zone.

Les zones sont par exemple intégrées à l'intérieur du four et sont disposées de manière que l'extraction dans la troisième zone s'effectue généralement en partie haute ou supérieure du four, la zone de chauffage étant interposée entre lesdites première et troisième zone.

Comme décrit dans le document EP-A1-1.699.613, l'admission d'air s'effectue latéralement. D'autres dispositions sont toutefois possibles, par exemple telles que l'admission se fasse en partie basse.

Le circuit de refroidissement, par circulation d'air, d'un tel four a pour fonction de modérer les effets de conduction thermique au travers de la masse d'air contenue dans le four et d'utiliser au maximum le rayonnement infrarouge des moyens de chauffage, afin de réchauffer au mieux l'épaisseur du corps des préformes sans en brûler la surface extérieure, dite « peau ». Ceci permet d'éviter toute dégradation de ladite peau des préformes mais également de maintenir l'environnement de la zone de chauffage en deçà de températures susceptibles d'affecter les organes mécaniques s'y trouvant, tels que par exemple les culots des lampes à rayonnement infrarouge.

Les moyens de ventilation comportent par exemple au moins un ventilateur centrifuge qui aspire de l'air depuis l'extérieur du four, à travers la zone d'admission, et qui souffle l'air aspiré vers les préformes pour brasser l'air chaud au sein de la zone de chauffage du four, notamment au voisinage des préformes.

Grâce à la circulation du flux d'air de refroidissement, on exploite au mieux le rayonnement infrarouge, ce qui permet de porter à la température désirée le corps de la préforme, de manière homogène sur l'épaisseur de la paroi du corps, sans détériorer la surface extérieure du corps des préformes ou encore ramollir le col des préformes.

Généralement, le four comporte encore des moyens de protection aptes à protéger les cols des préformes des rayonnements infrarouges ainsi que des moyens dédiés au refroidissement des cols, lesquels sont par exemple constitués par une partie dudit flux d'air de refroidissement et/ou des moyens de refroidissement supplémentaires, notamment par circulation d'eau.

De façon complémentaire, la zone d'extraction du four comporte des moyens d'extraction, associés au conduit d'extraction, tels qu'une hotte d'extraction d'air qui surplombe la zone de chauffage, et qui est destinée à extraire vers l'extérieur, à travers le conduit d'extraction, l'air provenant de la zone de chauffage du four, notamment afin d'évacuer des calories du four.

De tels moyens d'extraction permettent également de récupérer et d'évacuer des vapeurs résiduelles toxiques d'agent stérilisant lorsqu'une opération de décontamination de l'intérieur de la préforme est mise en oeuvre simultanément au conditionnement thermique.

Une telle opération de décontamination est avantageusement obtenue par le dépôt par condensation d'un agent stérilisant - comme le peroxyde d'hydrogène (H2O2) - destiné à être activé thermiquement dans le four par les moyens de chauffage puis évacué à l'état de vapeur par les moyens d'extraction d'air.

La zone d'extraction et la zone de chauffage sont agencées verticalement l'une au dessus de l'autre et elles sont séparées entre elles par un espace vide qui est complètement ouvert et à travers lequel s'écoule l'air provenant de la zone de chauffage jusqu'à être capté puis évacué par le conduit d'extraction.

En effet, pour l'homme du métier, il est constant qu'un four de conditionnement thermique de préformes comporte nécessairement, quelle que soit sa conception, une telle ouverture dans sa partie supérieure afin de permettre à l'air de refroidissement, réchauffé à l'issue de sa traversée de la zone de chauffage, d'être évacué par les moyens d'extraction situés en surplomb, voir naturellement par convection à l'extérieur du four en l'absence de tels moyens.

L'une des préoccupations de l'homme du métier est en effet la maîtrise du conditionnement thermique des préformes dont dépend directement la qualité du récipient final obtenu et à laquelle l'efficacité du refroidissement, comme du chauffage, est également étroitement liée.

Une autre de ses préoccupations concerne d'une manière générale l'hygiène et la propreté des récipients, donc des préformes destinées à être transformées en récipients après chauffage par soufflage (ou étirage-soufflage), récipients qui sont ensuite de préférence remplis directement en milieu aseptique après leur fabrication.

Comme indiqué précédemment, il est connu de stériliser l'intérieur des préformes au moyen d'agent, tel que le peroxyde d'hydrogène, lequel s'évapore lorsqu'il est soumis aux moyens de chauffage du four, puis est aspiré par la hotte.

Complémentairement, il est connu de décontaminer l'extérieur de la préforme, notamment le col, par une irradiation aux rayons ultra-violets.

Enfin, il est connu d'équiper la zone d'admission d'air du four par des moyens de filtration de l'air, de sorte que les moyens de ventilation soufflent sur les préformes un air filtré présentant un degré de propreté déterminé.

Toutefois, la maîtrise par la filtration de la qualité de l'air ventilé est limitée par l'efficacité des filtres, en particulier pour l'élimination de particules, tels que des micro-organismes, dont la taille est de l'ordre de 1 µm.

Le document US-A-5.714.109 propose un four qui vise à isoler le four des courants d'air et des poussières environnantes selon le préambule de la revendication 1. A cet effet, le four comporte un conduit dans lequel les préformes sont agencées en vue d'être chauffées et soumises à un flux de refroidissement. Le conduit comporte notamment une extrémité qui permet d'évacuer l'air de refroidissement en aval des préformes. Ce conduit comporte un ventilateur qui est agencé en amont des préformes pour la circulation de l'air dans le conduit.

On a cependant constaté que des fuites d'air pouvaient apparaître en amont de la préforme, transportant ainsi des poussières dans la zone de chauffage du four.

L'invention vise notamment à améliorer encore la propreté des préformes, et donc des récipients, sans toutefois altérer le conditionnement thermique des préformes opéré dans le four.

Dans ce but, l'invention propose de fermer la zone d'extraction d'air pour isoler l'intérieur du four, tout particulièrement au moins la zone de chauffage dans laquelle circulent les préformes, par rapport à l'environnement extérieur du four.

Bien entendu, une telle fermeture de l'ouverture supérieure va totalement à l'encontre des préjugés techniques de l'homme du métier qui, d'une part connaît et met déjà en oeuvre seules ou en combinaison les différentes solutions de stérilisation ou décontamination et qui, d'autre part, en aurait été totalement détourné, sans jamais l'envisager, en raison du fait qu'une telle fermeture provoquerait de nombreux problèmes sur la maîtrise du conditionnement thermique.

Au nombre de tels problèmes, on citera l'impossibilité présumée de contrôler de manière satisfaisante le conditionnement thermique par l'application combinée du chauffage et d'un refroidissement, en particulier une telle fermeture provoquerait une montée en température préjudiciable au bon conditionnement thermique des préformes et susceptible également de détériorer les organes mécaniques, tels que les culots des lampes.

On connaît aussi le document US-A-5,714,109 qui décrit et représente un four pour le conditionnement thermique de préformes en matière thermoplastique, qui vise notamment à isoler le four des courants d'air extérieurs, par exemple lorsqu'une porte de l'usine dans laquelle est situé le four est ouverte.

A cet effet, le four comporte un conduit dans lequel les préformes sont agencées en vue d'être chauffées et soumises à un flux d'air de refroidissement.

Le conduit comporte une première extrémité qui est raccordée à une unité de conditionnement de l'air et une second extrémité qui permet d'évacuer l'air de refroidissement en aval des préformes.

De plus, le conduit comporte un ventilateur qui est agencé en amont des préformes pour la circulation de l'air dans le conduit.

L'invention propose plus particulièrement un four du type décrit précédemment, caractérisé en ce que le four comporte une enceinte de confinement qui, s'étendant depuis le conduit d'extraction d'air jusqu'à au moins la zone de chauffage, est apte à isoler au moins ladite zone de chauffage par rapport à l'extérieur du four pour éviter la pollution de l'intérieur du four par des particules polluantes aéroportées.

Grâce à l'enceinte de confinement selon l'invention, on empêche l'entrée de particules polluantes à l'intérieur du four, en particulier dans la zone de chauffage que traversent les préformes, lorsque le four est en fonctionnement.

En effet, le demandeur a constaté que, de manière surprenante, l'ouverture ou espace vide qui séparait dans les fours antérieurs la zone d'extraction d'air et la zone de chauffage était une zone de pollution potentielle de l'intérieur du four dès lors que certaines particules polluantes étaient susceptibles, en passant par cette ouverture, de pénétrer jusqu'à la zone de chauffage et cela malgré le flux d'air ascendant qui, en fonctionnement, est aspiré par la hotte.

Or, de telles particules polluantes risquent de se déposer sur les préformes, ou des organes mécaniques, et donc de polluer directement ou ultérieurement les préformes.

Selon d'autres caractéristiques de l'invention :
- la zone d'admission comporte des moyens de filtration destinés à filtrer l'air de refroidissement admis dans ladite zone ;
- la zone d'admission de l'air de refroidissement comporte des moyens de détection de l'encrassement desdits moyens de filtration ;
- l'enceinte de confinement comporte au moins une bouche d'entrée d'air, dite auxiliaire, qui est agencée en aval de la zone de chauffage de manière qu'un flux d'air secondaire s'écoule, depuis l'extérieur du four, directement à travers ladite bouche auxiliaire d'entrée d'air, jusqu'au conduit d'extraction d'air ;
- l'enceinte de confinement comporte au moins une première partie, dite supérieure, qui présente une forme évasée en direction de la zone de chauffage afin de collecter le flux d'air principal ;
- l'enceinte de confinement comporte au moins une deuxième partie, dite inférieure, qui est reliée à la première partie et qui s'étend autour du four de manière à isoler de l'extérieur au moins la zone de chauffage ;
- la zone de chauffage comporte des moyens de ventilation qui sont aptes à aspirer l'air provenant du conduit d'admission et à souffler l'air ainsi aspiré vers les préformes, en créant une surpression au voisinage desdites préformes, de sorte que seul l'air aspiré par les moyens de ventilation entre en contact avec les préformes ;
- le four comporte au moins :
   -- un moyen d'extraction d'air qui est associé au conduit d'extraction et qui est apte à créer une dépression d'aspiration dans la zone d'extraction, en amont dudit conduit d'extraction,
   -- un moyen de mesure de la dépression au sein de la zone d'extraction d'air,
   -- un moyen de pilotage du moyen d'extraction de l'air, en fonction de paramètres comportant au moins :
      --- la valeur de la dépression mesurée au sein de la zone d'extraction d'air par ledit moyen de mesure, et
      --- une valeur de consigne de dépression prédéterminée afin de créer une dépression au sein de la zone d'extraction d'air, de sorte que le débit d'air extrait à travers le conduit d'extraction soit supérieur au débit d'air soufflé vers les préformes par les moyens de ventilation dans la zone de chauffage ;
- le four fonctionne selon au moins un premier mode, dit de production, dans lequel les moyens de chauffage sont activés, ou selon un second mode, dit hors production, dans lequel les moyens de chauffage sont désactivés, et, quel que soit le mode selon lequel le four fonctionne, le four est traversé en permanence par le flux d'air principal pour éviter le dépôt de particules polluantes à l'intérieur du four ;
- ladite valeur prédéterminée de consigne de dépression varie sélectivement en fonction des modes du four afin d'adapter le débit du flux d'air principal en fonction de celui des premier ou second modes dans lequel est le four.

D'autres caractéristiques et avantages de l'invention, ainsi que des détails de conception et de réalisation apparaîtront à la lecture de la description détaillée qui va suivre pour la compréhension de laquelle on se reportera aux dessins annexés dans lesquels :
- la figure 1 est une vue en perspective qui représente un four et qui illustre l'agencement de l'enceinte de confinement selon l'invention pour isoler de l'extérieur le circuit de refroidissement du four comportant successivement une zone d'admission d'air, une zone de chauffage des préformes et une zone d'extraction d'air ;
- la figure 2 est une vue schématique en section transversale, qui illustre l'écoulement, d'amont en aval, du flux d'air principal de refroidissement à travers lesdites zones du four et l'écoulement d'un flux d'air secondaire.

Dans la description et les revendications, on adoptera par convention et à titre non limitatif les termes "avant" ou "arrière" en référence à la direction longitudinale, "supérieur" et "inférieur", en référence à la direction verticale et selon la gravité terrestre, et les directions longitudinale, verticale et transversale en référence aux trièdres (L, V, T) indiqués sur les figures.

On utilisera aussi les expressions "amont" et "aval" en référence au sens de circulation du flux d'air de refroidissement à l'intérieur du four, c'est-à-dire depuis la zone d'admission, dite amont, vers la zone d'extraction, dite aval, du four.

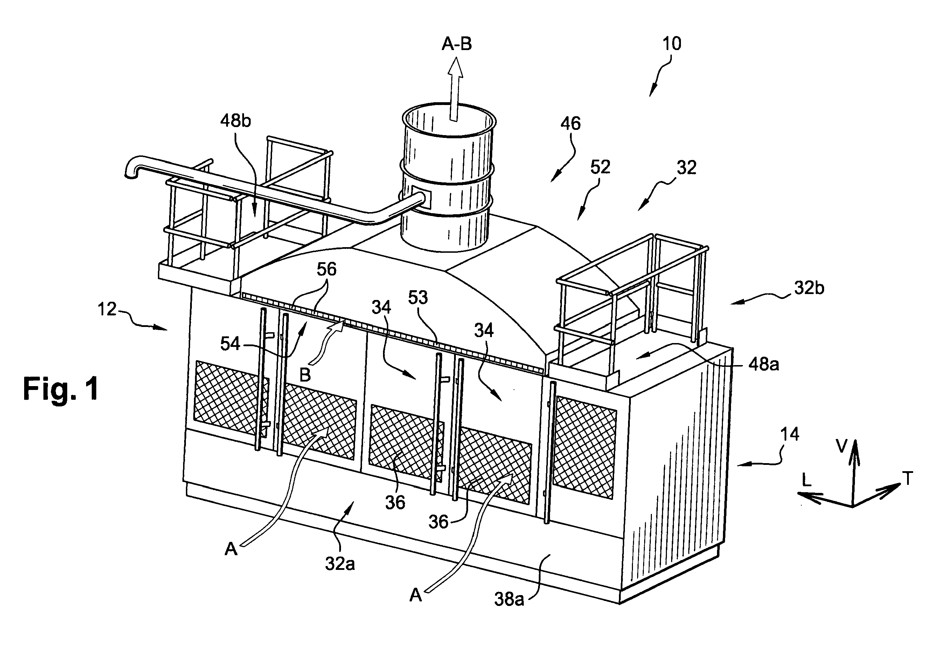

On a représenté à la figure 1 un four 10 pour le conditionnement thermique de préformes (non représentées) en matière thermoplastique, par exemple en PET (Polyéthylène Téréphtalate).

Le four 10 comporte par exemple ici un parcours de chauffe des préformes en « U » comportant deux tronçons longitudinaux de chauffage parallèles, l'un aller, l'autre retour, raccordés entre eux un tronçon curviligne transversal, dit de stabilisation.

Le four 10 a globalement la forme d'un tunnel qui s'étend longitudinalement, d'arrière en avant, depuis un premier côté arrière 12, jusqu'à un second côté avant 14 opposé fermé.

Le côté arrière 12 est ouvert pour permettre le passage des préformes. Toutefois, il est ouvert dans une zone sous pression, comme il sera décrit ultérieurement, de sorte que des particules polluantes ne peuvent pas pénétrer dans le four par ce côté arrière 12.

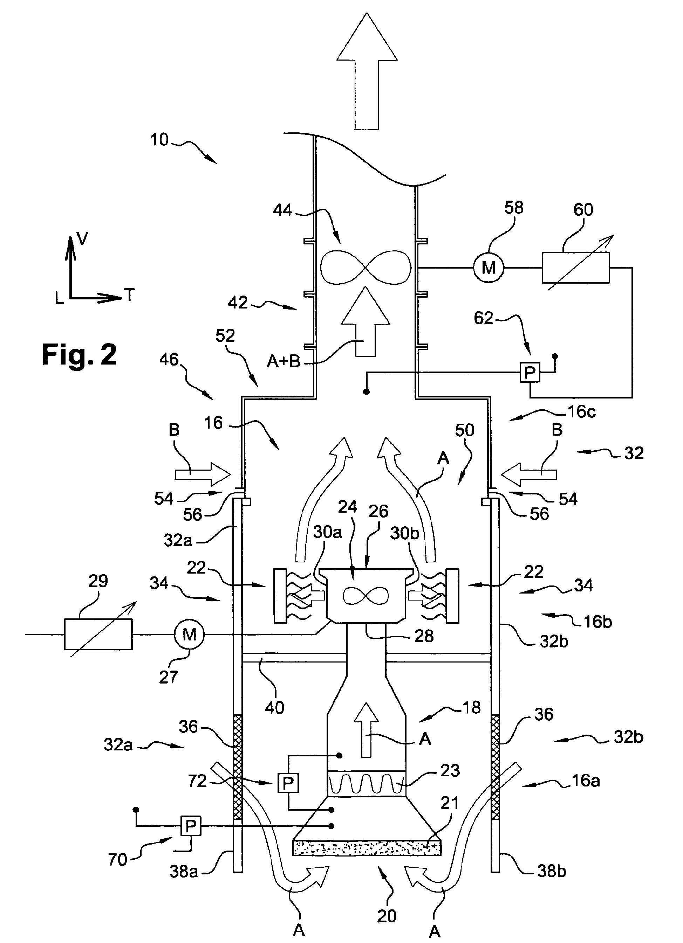

Comme on peut le voir à la figure 2, le four 10 présente une symétrie générale de conception par rapport à un plan vertical médian (non représenté) s'étendant longitudinalement en passant par le milieu du four 10, et des éléments identiques sont désignés par les mêmes références indicées "a" ou "b".

Le four 10 n'est que l'un des postes d'une installation de fabrication de récipients, par exemple de bouteilles, à partir de préformes.

Une telle installation de fabrication comporte par exemple un dispositif d'alimentation (non représenté) en préformes, qui alimente le four 10 en préformes par le côté arrière 12 du four 10.

Les préformes sont introduites à l'intérieur du four 10 par des moyens de transfert au niveau du côté arrière 12 où les préformes sont prises en charge par des moyens de convoyage du four 10, opération encore appelée « vêtissage ».

Les préformes sont ensuite entraînées dans le four 10 par les moyens de convoyage (non représentés), par exemple ici suivant un parcours de chauffe en U.

Enfin, les préformes ressortent du four 10 à travers le côté arrière 12 et sont, après avoir été conditionnées thermiquement par le four 10, prises en charge par d'autre moyens de transfert (non représentés) pour les acheminer directement vers un dispositif de moulage (non représenté) en vue de leur transformation par soufflage, ou par étirage-soufflage en un récipient creux.

Avantageusement, les moyens de convoyage des préformes sont aptes à transporter les préformes suivant le parcours de chauffe et comportent des éléments de support (non représentés), encore appelés parfois « tournettes », dont chacun coopère avec la paroi interne du goulot de chaque préforme.

De préférence, les éléments de support des moyens de convoyage sont aptes à entraîner en rotation sur elle-même chaque préforme afin de favoriser une répartition homogène et uniforme de la chaleur dans le corps de chaque préforme.

Selon la figure 2, le four 10 est traversé par un flux d'air principal A de refroidissement des préformes, qui s'écoule d'amont en aval, à travers le four 10, plus précisément ici verticalement de bas en haut.

Comme on peut le voir aux figures 1 et 2, le four 10 comporte pour l'essentiel un circuit de refroidissement 16, comportant successivement selon le sens d'écoulement du flux d'air principal A, une zone d'admission 16a d'air, encore dite zone amont, une zone de chauffage 16b des préformes et une zone d'extraction 16c d'air, encore dite zone aval.

Les trois zones 16a, 16b, 16c sont ici superposées verticalement et l'écoulement du flux d'air principal A s'effectue successivement à travers chaque zone, depuis le bas vers le haut, c'est-à-dire également suivant un gradient thermique depuis la zone la plus froide vers la zone la plus chaude.

Avantageusement, un tel agencement des zones du circuit de refroidissement permet d'obtenir un four présentant une bonne compacité et d'exploiter le principe de convection.

La zone d'admission 16a d'air comporte des moyens de raccordement tels qu'au moins un conduit d'admission 18 d'air à travers lequel le flux d'air principal A s'écoule depuis l'extérieur du four 10, vers l'intérieur du four 10.

Le conduit d'admission 18 d'air est équipé d'une entrée d'air 20 qui est débouchante verticalement vers le bas du four 10.

L'entrée d'air 20 est équipée par des moyens de filtration 21, 23 de l'air aspiré, de sorte que seul de l'air filtré, avec un degré de propreté déterminé, est aspiré et introduit dans la zone d'admission 16a du four 10.

Plus précisément, les moyens de filtration comportent au moins un premier filtre 21 amont et un second filtre 23 aval respectivement.

Avantageusement, le filtre 21 amont présente une section de passage supérieure à celle du filtre 23 aval.

Comme on peut le voir sur les figures, la zone de chauffage 16b est délimitée transversalement par une enceinte périphérique 32.

L'enceinte périphérique 32 comporte au moins une partie, dite inférieure, comportant une première paroi 32a latérale verticale et une seconde paroi 32b latérale verticale qui sont agencées transversalement en vis à vis et dont chacune s'étend longitudinalement, pour délimiter transversalement entre elles, à l'intérieur du four 10, la zone de chauffage 16b.

De plus, la zone de chauffage 16b est délimitée longitudinalement vers l'avant par le côté avant 14 fermé, et vers l'arrière par le côté arrière 12 ouvert.

Chaque paroi 32a, 32b latérale de l'enceinte périphérique 32 comporte de préférence une pluralité de portes 34, ici au nombre de cinq, qui permettent d'accéder à l'intérieur du four 10, par exemple pour exécuter des opérations de contrôle ou de maintenance à l'intérieur du four 10.

Chaque porte 34 comporte une grille d'aération 36 pour permettre l'écoulement du flux d'air principal A, depuis l'extérieur du four 10, jusqu'au conduit d'admission 18.

Chaque paroi 32a, 32b de l'enceinte périphérique 32 comporte une plaque inférieure 38a, 38b respectivement d'habillage du four 10, qui s'étend verticalement sensiblement du bas des portes 34 jusqu'au sol.

Selon la figure 2, la zone de chauffage 16b est délimitée verticalement vers le bas par un plancher 40 à travers lequel s'étend le conduit d'admission 18 vertical.

Enfin, l'enceinte périphérique 32 délimite, en aval, une ouverture supérieure 50, qui débouche verticalement vers le haut, pour permettre au flux d'air principal A de s'écouler vers le haut.

L'ouverture supérieure 50 s'étend sur tout le périmètre du four 10, longitudinalement depuis le côté arrière 12 jusqu'au côté avant 14 et transversalement entre les parois de l'enceinte 32.

La zone de chauffage 16b comporte des moyens de chauffage 22 latéraux des préformes, par exemple de lampes à rayonnement infrarouge (IR) qui, lorsqu'elles sont activées, irradient les corps des préformes pour les chauffer et les porter à une température propre à permettre leur transformation ultérieure en récipient.

Les lampes à rayonnement infrarouge sont par exemple superposées dans un râtelier formant un module de chauffage, des modules de chauffage étant disposés, côte à côte, les uns à la suite des autres selon le sens de défilement des préformes dans le four 10, ici longitudinalement le long des tronçons aller et retour du parcours de chauffe, à l'exception du tronçon de stabilisation adjacent au côté avant 14 fermé et du côté arrière 12 ouvert pour l'entrée et la sortie des préformes.

De plus, la zone de chauffage 16b comporte une série de moyens de ventilation, tels que des ventilateurs centrifuges, 24 (dont un seul est représenté à la figure 2) qui sont agencés au centre du four 10, en vis à vis des lampes à rayonnement infrarouge, de sorte que les préformes défilent entre les lampes et les ventilateurs centrifuges 24.

Chaque ventilateur centrifuge 24 est associé à un répartiteur 26 du flux d'air principal A, le répartiteur 26 étant interposé transversalement entre les moyens de chauffage 22.

Selon la figure 2, les ventilateurs centrifuges 24 sont entraînés en rotation par un moyen d'entraînement, ici un premier moteur 27, grâce à quoi chaque ventilateur centrifuge 24 aspire de l'air à travers une entrée d'air 28 amont du répartiteur 26 et souffle, ou projette, l'air ainsi aspiré globalement selon une direction transversale sur les préformes et les moyens de chauffage 22, à travers deux sorties 30a, 30b latérales opposées qui sont chacune agencées en regard des moyens de chauffage 22.

L'air filtré aspiré est de préférence soufflé par les ventilateurs centrifuges 24 à travers des réflecteurs ajourés qui comportent par exemple des fentes d'orientation verticales formant lesdites sorties 30a, 30b latérales.

Les réflecteurs sont disposés transversalement en vis-à-vis des moyens de chauffage 22 et sont destinés à réfléchir les rayonnements infrarouges pour accroître l'efficacité du chauffage, tout en permettant le passage de l'air de refroidissement.

Ainsi, les ventilateurs centrifuges 24 brassent l'air qui est situé au voisinage des moyens de chauffage 22 et des préformes, afin notamment d'éviter de brûler la surface extérieure du corps des préformes et d'homogénéiser la chauffe du corps des préformes.

De plus, les ventilateurs centrifuges 24 créent une surpression dans la zone de chauffage 16b, au voisinage des préformes.

Le premier moteur 27 coopère avec un premier moyen de pilotage 29, pour faire varier la vitesse de rotation des ventilateurs centrifuges 24 et par conséquent faire varier le débit d'air soufflé sur les préformes.

Avantageusement, la zone de chauffage 16b comporte des moyens de protection thermique (non représentés) du col des préformes pour éviter leur déformation par chauffage.

Enfin, la zone d'extraction 16c d'air comporte au moins un conduit d'extraction 42 de l'air à travers lequel le flux d'air principal A s'écoule depuis l'intérieur du four 10, vers l'extérieur du four 10.

L'extrémité aval du conduit d'extraction 42 est par exemple raccordée sur un circuit d'évacuation qui guide l'air extrait du four 10 dans un circuit de chauffage de locaux, ou à l'extérieur du local dans lequel est situé le four 10.

Le conduit d'extraction 42 de l'air comporte un moyen d'extraction 44 associé, par exemple un ventilateur 44, apte à créer une dépression en amont du ventilateur 44, dans le conduit d'extraction 42, afin d'extraire l'air vers l'extérieur du four 10, selon le sens des flèches représentées sur la figure 2.

Le terme dépression signifie ici une pression inférieure à la pression atmosphérique qui règne à l'extérieur du four 10.

Selon un autre aspect, la zone d'extraction 16c d'air est isolée de l'extérieur du four 10, au moyen d'une enceinte de confinement 46.

L'enceinte de confinement 46 constitue avantageusement une première partie, dite supérieure, de l'enceinte 32.

Comme l'illustrent les figures 1 et 2, l'enceinte de confinement 46 s'étend depuis l'ouverture 50 aval de la zone de chauffage 16b, jusqu'au conduit d'extraction 42, de façon à isoler au moins la zone de chauffage 16b par rapport à l'extérieur du four 10, pour éviter la pollution de l'intérieur du four 10 par des particules polluantes aéroportées.

Par comparaison avec les fours antérieurs, l'enceinte de confinement 46 ferme complètement l'ouverture supérieure 50 qui existait auparavant entre la zone de chauffage 16b et le conduit d'extraction 42, si l'espace vide au dessus de la zone de chauffage 16b subsiste, il est désormais clos par l'enceinte de confinement 46 qui, à la manière d'un couvercle, l'isole de l'extérieur du four 10.

L'enceinte de confinement 46 comporte au moins une hotte 52 d'extraction qui présente une forme évasée vers la zone de chauffage 16b et donc une section décroissante vers le haut.

L'enceinte de confinement 46 s'étend verticalement vers le haut depuis une embase 53 inférieure de forme rectangulaire.

L'embase 53 inférieure de la hotte 52 de l'enceinte de confinement 46 comporte deux bords longitudinaux opposés, globalement rectilignes, qui sont reliés sur un bord supérieur des parois 32a, 32b latérales respectivement du four 10.

De façon complémentaire, selon la figure 1, l'enceinte de confinement 46 comporte encore une première plaque 48a et une seconde plaque 48b horizontales supérieures qui sont respectivement accolées à un premier bord et à un second bord transversal de l'embase 53 de la hotte 52, afin de délimiter verticalement la zone de chauffage 16b du four 10.

La première plaque 48a et la seconde plaque 48b sont ici chacune équipée d'une trappe de visite (non représentée), pour accéder à l'intérieur du four 10 depuis le dessus du four 10, par exemple pour exécuter des tâches de maintenance.

De préférence, la hotte 52 de l'enceinte de confinement 46 s'étend longitudinalement au dessus des tronçons aller et retour du parcours de chauffe le long desquels sont agencés les moyens de chauffage 22, tandis que la première plaque 48a et la seconde plaque 48b sont respectivement agencées au dessus du premier côté arrière 12 et du second côté avant 14.

Comme illustré sur la figure 1 , la première plaque 48a et la seconde plaque 48b constituent un plafond, qui en complément de la hotte 52, permet de fermer complètement l'intérieur du four 10, chacune des plaques 48a, 48b coopérant avec la partie inférieure de l'enceinte 32 formées par les parois verticales 32a, 32b.

Ainsi, l'enceinte de confinement 46 est apte à collecter le flux d'air principal A qui s'écoule depuis la zone de chauffage 16b, pour extraire le flux d'air principal A vers l'extérieur par l'intermédiaire du conduit d'extraction 42.

Partant de l'hypothèse que le four 10 n'est pas parfaitement étanche à l'air, et que le ventilateur 44 d'extraction engendre une dépression au sein du four 10, des filets d'air parasites risquent de pénétrer dans le four 10, notamment autour des portes 34.

Or, de tels filets d'air parasites, qui ne sont pas filtrés, constituent des vecteurs potentiels de particules polluantes qui risquent d'être ainsi aéroportées au voisinage des préformes et par conséquent de polluer notamment lesdites préformes.

Pour éviter la pénétration à l'intérieur du four 10 de tels filets d'air dont la qualité est incontrôlée, l'enceinte de confinement 46 délimite des bouches d'entrée d'air 54 secondaires, ou auxiliaires, qui sont agencées en aval de la zone de chauffage 16b, de sorte qu'un flux d'air secondaire B, dit de fuite, s'écoule à travers les bouches d'entrée d'air 54 sous l'effet de la dépression engendrée par le ventilateur 44 d'extraction.

Ainsi, l'air du flux d'air secondaire B s'écoule depuis l'extérieur du four 10, directement jusqu'au conduit d'extraction d'air 42, sans passer par la zone sensible de chauffage 16b.

Plus particulièrement, chaque bouche d'entrée d'air 54 secondaire comporte une pluralité d'orifices 56 qui sont alignés longitudinalement de part et d'autre de la hotte 52, au voisinage de la jonction de l'embase 53 de la hotte 52 sur les parois latérales 32a, 32b.

Une telle conception favorise l'entrée d'air à travers la bouche d'entrée d'air 54, plutôt qu'à travers une entrée d'air parasite, non contrôlée, sans risquer de polluer les préformes ou des organes internes du four 10.

Avantageusement, le débit d'extraction d'air par le conduit d'extraction 42 est supérieur au débit d'air filtré aspiré et ventilé par les ventilateurs centrifuges 24 de manière à évacuer la totalité de l'air de refroidissement ventilé et à garantir que l'air pénétrant de façon parasite à l'intérieur du four 10 en raison de la dépression existant en aval du conduit d'extraction 42 pénètre exclusivement par lesdites bouches d'entrée d'air 54 secondaire.

Ainsi, le flux d'air secondaire B pénétrant par les orifices 56 d'une bouche d'entrée d'air 54 ne circule jamais dans la zone de chauffage 16b laquelle est en permanence maintenue en surpression pour empêcher toute pénétration de particules polluantes.

Selon un autre aspect, le ventilateur 44 d'extraction d'air est entraîné en rotation au moyen d'un second moteur 58 qui, en fonction de son régime de fonctionnement, fait varier la vitesse de rotation du ventilateur 44 et par conséquent, fait varier la dépression en aval du ventilateur 44 et le débit d'air extrait par le ventilateur 44 à travers le conduit d'extraction 42.

A cet effet, le four 10 comporte un second moyen de pilotage 60 du ventilateur 44 d'extraction d'air, qui coopère avec le second moteur 58 afin d'en faire varier le régime de fonctionnement.

De plus, le four 10 comporte un premier moyen de mesure 62 de la dépression au sein de la zone d'extraction 16c d'air, en amont du ventilateur 44 d'extraction.

Comme on peut le voir à la figure 2, le moyen de mesure 62 de la dépression est ici un moyen de mesure de pression différentielle, ou transmetteur de pression différentielle, par exemple un capteur de pression piézorésistif.

Le moyen de mesure 62 de la dépression mesure la différence de pression entre l'extérieur du four 10 et un point situé à l'intérieur de l'enceinte de confinement 46, en amont du ventilateur 44 d'extraction et en aval de la bouche d'entrée d'air 54 secondaire associée.

Le second moyen de pilotage 60 pilote le ventilateur 44 d'extraction d'air en fonction de la valeur de la pression différentielle mesurée par le moyen de mesure 62 et d'une valeur consigne de dépression, afin de réguler le débit d'air extrait par le ventilateur 44 d'extraction suivant la valeur consigne associée.

Ainsi, le moyen de pilotage 60 permet d'obtenir un débit constant d'air, en fonction de la valeur consigne de dépression, indépendamment de l'état de l'entrée d'air 20 du conduit d'admission 18, notamment de l'état d'encrassement des moyens de filtration 21, 23.

La valeur consigne de dépression est prédéterminée de manière à créer une dépression au sein de l'enceinte de confinement 46, grâce à quoi le débit d'air extrait à travers le conduit d'extraction 42 est supérieur au débit d'air soufflé sur les préformes par les ventilateurs centrifuges 24, indépendamment du débit d'air soufflé sur les préformes par les ventilateurs centrifuges 24.

Ainsi, le moyen de pilotage 60 constitue un moyen d'asservissement des ventilateurs centrifuges 24 et du ventilateur 44 d'extraction.

La valeur consigne de dépression est par exemple comprise entre 0 et 100 Pascals.

Le four 10 fonctionne selon un mode dit de production, dans lequel les moyens de chauffage 22 sont activés, ou selon un mode dit hors production, dans lequel les moyens de chauffage 22 sont désactivés.

Le mode de production correspond à un fonctionnement normal de chauffage des préformes, et le mode hors production correspond à tout autre état de fonctionnement du four 10, par exemple un mode de veille du four 10, ou un mode de maintenance.

Les ventilateurs centrifuges 24 et le ventilateur 44 d'extraction sont entraînés en rotation en permanence, quel que soit le mode selon lequel le four 10 fonctionne, grâce à quoi le four 10 est traversé en permanence par le flux d'air principal A.

Ainsi, seul de l'air filtré s'écoule à travers la zone de chauffage 16b, empêchant ainsi le dépôt de particules polluantes sur les préformes ou des organes internes du four 10.

De plus, les ventilateurs centrifuges 24 sont pilotés par le moyen de pilotage 29 associé, de sorte que le débit d'air qui est soufflé par les ventilateurs centrifuges 24 est inférieur en mode hors production qu'en mode production du four 10.

De même, la valeur consigne de dépression varie en fonction du mode selon lequel le four fonctionne, la valeur consigne de dépression étant moins grande lorsque le four 10 fonctionne en mode hors production.

Plus particulièrement, lorsque le four 10 fonctionne selon son mode hors production, la valeur consigne de dépression est déterminée de sorte que le débit du flux d'air extrait par le ventilateur 44 d'extraction est suffisant pour extraire le surplus de chaleur dans le four 10.

De même, lorsque le four 10 fonctionne selon son mode hors production, la première valeur consigne de dépression est déterminée de sorte que le débit du flux d'air extrait par le ventilateur 44 d'extraction est suffisant pour empêcher aux éventuelles particules polluantes de se déposer sur les préformes ou sur un organe interne du four 10, notamment les particules polluantes qui sont aspirées à travers la bouche d'entrée d'air 54 secondaire.

Selon un autre aspect, la zone d'admission 16a d'air comporte des moyens 70, 72 de détection de l'encrassement des moyens de filtration 21, 23.

Les moyens de détection de l'encrassement comportent un second moyen de mesure 70 de la dépression, similaire au premier moyen de détection 62 décrit précédemment.

Le second moyen de mesure 70, illustré à la figure 2, mesure la différence de pression entre l'extérieur du four 10 et un espace qui est situé entre le premier filtre 21 amont et le second filtre 23 aval de l'entrée d'air 20.

Ainsi, le second moyen de mesure 70 est apte à mesurer l'état d'encrassement, ou de colmatage, du filtre 21 amont par comparaison de la dépression mesurée et une valeur de référence prédéterminée.

De même, les moyens de détection de l'encrassement comportent un troisième moyen de mesure 72 qui mesure la différence de pression entre un espace qui est situé entre le premier filtre 21 amont et le second filtre 23 aval, et un espace qui est situé directement en aval du second filtre 23 aval de l'entrée d'air 20.

Ainsi, le troisième moyen de mesure 72 est apte à mesurer l'état d'encrassement, ou de colmatage, du second filtre 23 aval par comparaison de la dépression mesurée et une valeur de référence prédéterminée.

Selon une variante de réalisation non représentée, le four 10 comporte un premier moyen de mesure du débit d'air qui est agencé dans le conduit d'extraction 42, et un second moyen de mesure du débit d'air qui est agencé dans le conduit d'admission 18.

Selon cette variante, le premier et le second moyens de mesure du débit d'air coopèrent chacun avec le second moyen de pilotage 60 du ventilateur 44 d'extraction, de sorte que le débit d'air qui est extrait à travers le conduit d'extraction 42 est supérieur au débit d'air aspiré soufflé par les ventilateurs centrifuges 24.

Enfin, dans le but de garantir un degré élevé d'hygiène et de propreté des préformes, le four 10 comporte des moyens de stérilisation, ou d'aseptisation, (non représentés) qui sont aptes à émettre des rayons ultra-violets, afin d'irradier des organes internes du four qui sont susceptibles d'être en contact avec la préforme, par exemple les tournettes qui coopèrent avec la paroi interne du col des préformes.

Avantageusement, les préformes sont stérilisées au moyen d'un agent stérilisant tel que du peroxyde d'hydrogène déposé par condensation à l'intérieur de la préforme, lequel agent s'évapore lorsqu'il est soumis aux moyens de chauffage du four 10, puis est aspiré par la hotte 52.

A titre non limitatif, l'invention concerne aussi un four 10 qui ne comporte pas de ventilateur 44 d'extraction, et/ou pas de ventilateur centrifuge 24 pour souffler l'air sur les préformes, le four 10 étant alors traversé d'amont en aval par un flux d'air principal qui s'écoule verticalement vers le conduit d'extraction 42 par convection.

De même, l'invention n'est nullement limitée à un four de forme globalement parallélépipédique, tel que celui décrit ci-dessus.

L'invention s'applique aussi à un four en forme d'arc, ou circulaire, ou annulaire, ou toutes autres formes.

## Revendications

1. Four (10) pour le conditionnement thermique de préformes en matière thermoplastique, comportant au moins un circuit de refroidissement (16) par circulation d'un flux d'air principal (A) de refroidissement qui traverse successivement à l'intérieur du four (10) au moins :
- une zone d'admission (16a) de l'air de refroidissement, qui comporte au moins un conduit d'admission (18) d'air à travers lequel ledit flux d'air principal (A) de refroidissement est apte à s'écouler, depuis l'extérieur du four (10), vers l'intérieur du four (10),
- une zone de chauffage (16b) qui est alimentée en air par le conduit d'admission (18) et qui comporte des moyens de chauffage (22) des préformes, et
- une zone d'extraction (16c) d'air dans laquelle débouche au moins un conduit d'extraction (42) d'air,
le four (10) comporte une enceinte de confinement (46) qui, s'étendant depuis le conduit d'extraction (42) d'air jusqu'à au moins la zone de chauffage (16b), est apte à isoler au moins ladite zone de chauffage (16b) par rapport à l'extérieur du four (10) pour éviter la pollution de l'intérieur du four (10) par des particules polluantes aéroportées,
**caractérisé en ce que** l'enceinte de confinement (46) comporte au moins une bouche d'entrée d'air (54), dite secondaire, qui est agencée en aval de la zone de chauffage (16b) de manière qu'un flux d'air secondaire (B) s'écoule, depuis l'extérieur du four (10), directement à travers ladite bouche secondaire d'entrée d'air (54), jusqu'au conduit d'extraction (42) d'air.

2. Four (10) selon la revendication 1 , **caractérisé en ce que** la zone d'admission (16a) d'air comporte des moyens de filtration (21, 23) qui sont destinés à filtrer l'air de refroidissement admis dans la zone d'admission (16a).

3. Four (10) selon la revendication 2, **caractérisé en ce que** la zone d'admission (16a) de l'air de refroidissement comporte des moyens de détection (70, 72) de l'encrassement desdits moyens de filtration (21, 23).

4. Four (10) selon l'une des revendications 1 à 3, **caractérisé en ce que** l'enceinte de confinement (46) comporte au moins une première partie, dite supérieure, qui présente une forme évasée en direction de la zone de chauffage (16b) afin de collecter le flux d'air principal (A).

5. Four (10) selon la revendication 4, **caractérisé en ce que** l'enceinte de confinement (46) comporte au moins une deuxième partie, dite inférieure, qui est reliée à la première partie et qui s'étend autour du four (10) de manière à isoler de l'extérieur au moins la zone de chauffage (16b).

6. Four (10) selon l'une quelconque des revendications précédentes, **caractérisé en ce que** la zone de chauffage (16b) comporte des moyens de ventilation (24) qui sont aptes à aspirer l'air provenant du conduit d'admission (18) et à souffler l'air ainsi aspiré vers les préformes, en créant une surpression au voisinage desdites préformes, de sorte que seul l'air aspiré par les moyens de ventilation (24) entre en contact avec les préformes.

7. Four (10) selon l'une quelconque des revendications précédentes, **caractérisé en ce que** le four (10) comporte au moins :
- un moyen d'extraction (44) d'air qui est associé au conduit d'extraction (42) et qui est apte à créer une dépression d'aspiration dans la zone d'extraction (16c), en amont dudit conduit d'extraction (42),
- un moyen de mesure (62) de la dépression au sein de la zone d'extraction (16c) d'air,
- un moyen de pilotage (60) du moyen d'extraction (44) de l'air, en fonction de paramètres comportant au moins :
-- la valeur de la dépression mesurée au sein de la zone d'extraction (16c) d'air par ledit moyen de mesure (62), et
-- une valeur de consigne de dépression prédéterminée afin de créer une dépression au sein de la zone d'extraction (16c) d'air, de sorte que le débit d'air extrait à travers le conduit d'extraction (42) soit supérieur au débit d'air soufflé vers les préformes par les moyens de ventilation (24) dans la zone de chauffage (16b).

8. Four (10) selon l'une quelconque des revendications précédentes, **caractérisé en ce que** le four (10) fonctionne selon au moins un premier mode, dit de production, dans lequel les moyens de chauffage (22) sont activés, ou selon un second mode, dit hors production, dans lequel les moyens de chauffage (22) sont désactivés, et **en ce que**, quel que soit le mode selon lequel le four (10) fonctionne, le four (10) est traversé en permanence par le flux d'air principal (A) pour éviter le dépôt de particules polluantes à l'intérieur du four (10).

9. Four (10) selon la revendication 7 prise en combinaison avec la revendication 8, **caractérisé en ce que** ladite valeur prédéterminée de consigne de dépression varie sélectivement en fonction des modes du four (10) afin d'adapter le débit du flux d'air principal (A) en fonction de celui des premier ou second modes dans lequel est le four (10).

## Claims

1. An oven (10) for the thermal conditioning of preforms made of a thermoplastic material which comprises at least one cooling circuit (16) using the circulation of a main flow of cooling air (A) which, from the upstream side to the downstream side, sequentially traverses inside the oven (10) at least:
- one cooling air intake area (16a), which comprises at least one air intake duct (18) through which the said main flow of cooling air (A) can flow, from the outside of the oven (10) to the inside of the oven (10),
- one heating area (16b) which is supplied with air by the intake duct (18) and which comprises means (22) for heating the preforms, and
- one air extraction area (16c) into which at least one air extraction duct (42) opens,
the oven (10) comprises a confining housing (46) that extends from the air extraction duct (42) to at least the heating area (16b) and is capable of insulating at least the said heating area (16b) with respect to the outside of the oven (10) in order to prevent the pollution of the inside of the oven (10) by airborne polluting particles,
**characterized in that** the confining housing (46) comprises at least one so-called secondary air inlet opening (54) which is arranged downstream of the heating area (16b) in such a way that a secondary flow of air (B) flows from outside the oven (10), directly through the said secondary air inlet opening (54), to the air extraction duct (42).

2. The oven (10) as claimed in claim 1, **characterized in that** the air intake area (16a) comprises filtering means (21, 23) which are intended to filter the cooling air taken into the intake area (16a).

3. The oven (10) as claimed in claim 2, **characterized in that** the cooling air intake area (16a) comprises means (70, 72) for detecting the accumulation of dirt on the said filtering means (21, 23).

4. The oven (10) as claimed in one of claims 1 to 3, **characterized in that** the confining housing (46) comprises at least one so-called upper first part which has a widened shape in the direction of the heating area (16b) so as to collect the main flow of air (A).

5. The oven (10) as claimed in claim 4, **characterized in that** the confining housing (46) comprises at least one so-called lower second part which is connected to the first part and which extends around the oven (10) so as to insulate at least the heating area (16b) from the outside.

6. The oven (10) as claimed in any one of the preceding claims, **characterized in that** the heating area (16b) comprises ventilation means (24) which can draw in the air coming from the intake duct (18) and blow the air drawn in in this way toward the preforms, creating an elevated pressure in the vicinity of the said preforms, such that only the air drawn in by the ventilation means (24) comes into contact with the preforms.

7. The oven (10) as claimed in any one of the preceding claims, **characterized in that** the oven (10) comprises at least:
- an air extraction means (44) which is associated with the extraction duct (42) and which can create a suction reduced pressure in the extraction area (16c) upstream of the said extraction duct (42),
- a means (62) for measuring the reduced pressure inside the air extraction area (16c),
- a means (60) for controlling the air extraction means (44) as a function of parameters that include at least:
-- the value of the reduced pressure measured inside the air extraction area (16c) by the said measuring means (62), and
-- a predetermined reference value for the reduced pressure so as to create a reduced pressure inside the air extraction area (16c) such that the flow rate of air extracted through the extraction duct (42) is greater than the flow rate of the air blown toward the preforms by the ventilation means (24) in the heating area (16b).

8. The oven (10) as claimed in any one of the preceding claims, **characterized in that** the oven (10) operates in a first so-called production mode in which the heating means (22) are activated, or in a second so-called out-of-production mode in which the heating means (22) are deactivated and **in that**, irrespective of the mode in which the oven (10) is operating, the oven (10) is traversed permanently by the main flow of air (A) in order to avoid the deposition of polluting particles inside the oven (10).

9. The oven (10) as claimed in claim 7 taken in combination with claim 8, **characterized in that** the said predetermined reference value for the reduced pressure varies selectively as a function of the modes of the oven (10) so as to adapt the flow rate of the main flow of air (A) depending on whether the oven (10) is in the first or second mode.

## Patentansprüche

1. Ofen (10) für die Wärmbehandlung von Vorformlingen aus thermoplastischem Material, mit wenigstens einem Kühlungskreis (16) mittels Zirkulation eines Kühlungshauptluftstroms (A), der in dem Ofen (10) nacheinander wenigstens durchquert:
- eine Einlasszone (16a) für Kühlungsluft, die wenigstens eine Einlassleitung (18) für Luft aufweist, durch die der Kühlungshauptluftstrom (A) von außerhalb des Ofens (10) in den Ofen (10) strömen kann,
- eine Heizzone (16b), die durch die Einlassleitung (18) mit Luft versorgt wird und Mittel (22) zum Erhitzen von Vorformlingen aufweist, und
- eine Luftentnahmezone (16c), in die wenigstens eine Luftentnahmeleitung (42) mündet,
wobei der Ofen (10) einen Umschließungsbehälter (46) umfasst, der von der Luftentnahmeleitung (42) wenigstens bis zu der Heizzone (16b) verläuft und wenigstens die Heizzone (16b) gegenüber der äußeren Umgebung des Ofens (10) isolieren kann, um die Verschmutzung des Innenraums des Ofens (10) durch in der Luft transportierte Schmutzpartikel zu vermeiden,
**dadurch gekennzeichnet, dass** der Umschließungsbehälter (46) wenigstens eine so genannte sekundäre Lufteintrittsmündung (54) aufweist, die der Heizzone (16b) nachgeordnet ist, derart, dass ein Sekundärluftstrom (B) von außerhalb des Ofens (10) direkt durch die sekundäre Lufteintrittsmündung (54) bis zu der Luftentnahmeleitung (42) strömt.

2. Ofen (10) nach Anspruch 1, **dadurch gekennzeichnet, dass** die Lufteinlasszone (16a) Filtermittel (21, 23) umfasst, die dazu bestimmt sind, Kühlungsluft, die in die Einlasszone (16a) eingelassen wird, zu filtern.

3. Ofen (10) nach Anspruch 2, **dadurch gekennzeichnet, dass** die Kühlungsluft-Einlasszone (16a) Mittel (70, 72) zum Detektieren der Verschmutzung der Filtermittel (21, 23) umfasst.

4. Ofen (10) nach einem der Ansprüche 1 bis 3, **dadurch gekennzeichnet, dass** der Umschließungsbehälter (46) wenigstens einen ersten so genannten oberen Teil aufweist, der eine in Richtung der Heizzone (16b) erweiterte Form aufweist, um den Hauptluftstrom (A) zu sammeln.

5. Ofen (10) nach Anspruch 4, **dadurch gekennzeichnet, dass** der Umschließungsbehälter (46) wenigstens einen zweiten so genannten unteren Teil aufweist, der mit dem ersten Teil verbunden ist und in der Weise um den Ofen (10) verläuft, dass wenigstens die Heizzone (16b) von der äußeren Umgebung isoliert ist.

6. Ofen (10) nach einem der vorhergehenden Ansprüche, **dadurch gekennzeichnet, dass** die Heizzone (16b) Belüftungsmittel (24) umfasst, die Luft, die von der Einlassleitung (18) stammt, ansaugen können und die so angesaugte Luft zu den Vorformlingen blasen können, indem sie in der Umgebung der Vorformlinge einen Überdruck erzeugen, derart, dass nur die durch die Belüftungsmittel (24) angesaugte Luft mit den Vorformlingen in Kontakt gelangt.

7. Ofen (10) nach einem der vorhergehenden Ansprüche, **dadurch gekennzeichnet, dass** der Ofen (10) wenigstens umfasst:
- ein Luftentnahmemittel (44), das der Entnahmeleitung (42) zugeordnet ist und dafür ausgelegt ist, in der Entnahmezone (16c) stromaufseitig der Entnahmeleitung (42) einen Saugunterdruck zu erzeugen,
- ein Mittel (62) zum Messen des Unterdrucks in der Luftentnahmezone (16c),
- ein Mittel (60) zum Vorsteuern des Luftentnahmemittels (44) als Funktion von Parametern, die wenigstens umfassen:
-- den Wert des Unterdrucks, der in der Luftentnahmezone (16c) durch das Messmittel (62) gemessen wird, und
-- einen vorgegebenen Unterdruck-Sollwert, um einen Unterdruck in der Luftentnahmezone (16c) zu erzeugen, derart, dass der Entnahmeluftdurchsatz durch die Entnahmeleitung (42) größer als der Durchsatz von Luft ist, die durch die Belüftungsmittel (24) in der Heizzone (16b) zu den Vorformlingen geblasen wird.

8. Ofen (10) nach einem der vorhergehenden Ansprüche, **dadurch gekennzeichnet, dass** der Ofen (10) wenigstens in einer ersten so genannten Produktionsbetriebsart arbeitet, in der die Heizmittel aktiviert sind, oder in einer zweiten so genannten produktionslosen Betriebsart arbeitet, in der die Heizmittel (22) deaktiviert sind, und dass der Ofen (10) unabhängig von der Betriebsart, in der der Ofen (10) arbeitet, ständig von dem Hauptluftstrom (A) durchquert wird, um die Ablagerung von Schmutzpartikeln innerhalb des Ofens (10) zu vermeiden.

9. Ofen (10) nach Anspruch 7 in Kombination mit Anspruch 8, **dadurch gekennzeichnet, dass** sich der vorgegebene Unterdrucksollwert wahlweise als Funktion der Betriebsarten des Ofens (10) verändert, um den Durchsatz des Hauptluftstroms (A) als Funktion der ersten oder der zweiten Betriebsart, in der sich der Ofen (10) befindet, anzupassen.
